# EUROPÄISCHE PATENTANMELDUNG

(11) **EP 2 608 384 A1**
(43) Veröffentlichungstag der Anmeldung: **26.06.2013**
(21) Anmeldenummer: 11194185.2
(22) Anmeldetag: 19.12.2011
(51) Int. Cl.: H02M 7/483, H02M 1/32, H02H 3/05

(54) **Modularer Stromrichter mit Fehlererkennung**

(71) Anmelder: Siemens Aktiengesellschaft, 80333 München (DE)
(72) Erfinder: Köpken, Hans-Georg, Dr., 91056 Erlangen (DE)

(57) **Zusammenfassung**

Stromrichterschaltung (4), umfassend wenigstens zwei Submodule (28,30,32) in Reihenschaltung, die über eine Induktivität (26) elektrische Leistung aus einer eine Gleichspannungquelle (20, 8) bezieht, wobei jedes Submodul (28,30,32) eingangsseitig eine einphasige Halbbrücke (48,49) und lastseitig eine einphasige Vollbrücke (50) aufweist, und wobei parallel zur Halbbrücke (48,49) und Vollbrücke (50) ein Zwischenkreiskondensator (52) geschaltet ist.

Die Stromrichterschaltung (4) umfasst eine erste Steuervorrichtung (62) zum Erfassen eines Fehlers in einem der Submodule (28,30,32) und zum Kurzschließen des Submoduls (28,30,32) über einen in der Halbbrücke (48,49) vorhandenen ersten Schalter (54), der parallel zum Eingang des Submoduls (28,30,32) geschaltet ist, und eine zweite Steuervorrichtung (64) zum Erfassen des Fehlers und zum Kurzschließen des Submoduls (28,30,32) über einen in der Halbbrücke (48,49) vorhandenen zweiten Schalter (56) und die Vollbrücke (50).

## Beschreibung

Die Erfindung betrifft eine Stromrichterschaltung gemäß dem Oberbegriff des Anspruchs 1, einen Elektromotor, ein Fahrzeug und ein Verfahren zur Ansteuerung der Stromrichterschaltung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Erfindung schlägt vor, in einem Submodul eine Redundanz auszunutzen, um im Fehlerfall einen Strom durch den modularen Umrichter an diesem Submodul vorbeizuleiten.

Die Erfindung geht von der Überlegung aus, dass sich über eine Eingangshalbbrücke an jedem Submodul ein Strom aus einer elektrischen Leistungsquelle an dem entsprechenden Submodul vorbeileiten lässt, wenn ein Fehler in diesem Submodul auftritt.

Die Erfindung geht ferner von der Überlegung aus, dass es möglich wäre, den Strom mit direkt kontaktierenden MOSFETs (Metalloxidfeldeffekttransistoren), das heißt MOSFETs, die ohne Bonddrähte verschaltet werden, im Fehlerfall am Submodul vorbeizuleiten. Wenn beispielsweise die Ansteuerung der Schalter des Submoduls auffällt und die Spannung damit an den Schaltern steil ansteigt, könnten die MOSFETs durch eine Überspannung zerstört werden und den Strom aus der elektrischen Leistungsquelle permanent durchleiten. Zumindest über den den Eingang des Submoduls überbrückenden Schalter der Eingangshalbbrücke wäre damit der Strom aus der Leistungsquelle am Submodul vorbeigeleitet. Ob dies in der Praxis wirklich funktioniert, ist jedoch fraglich. Die Hersteller von MOSFETs garantieren jedoch nicht, dass die MOSFETs nach einer Überspannung zuverlässig in einen leitenden Zustand übergehen. Somit bleibt ein nicht quantifizierbares Risiko, dass der defekte MOSFET den Strom nicht wie gewünscht führen kann.

Es wäre auch möglich, jedes Submodul redundant auszuführen, um die Funktionalität jedes Submoduls im Fehlerfall sicherzustellen.

Die Erfindung erkennt jedoch, dass in einem modularen Stromrichter der eingangs genannten Art einzelne Submodule überbrückt werden können, ohne dass die restlichen Submodule im modularen Umrichters davon betroffen wären. Diese Überbrückung kann in jedem Submodul über einen Schalter der Eingangshalbbrücke erfolgen. Der Erfindung liegt ferner die Erkenntnis zugrunde, dass jedes Submodul mindestens einen zweiten redundante Strompfad besitzt, über den der Strom aus der Leistungsquelle am Submodul vorbeigeleitet werden könnte. Dieser weitere Strompfad führt durch den Wechselrichter und den weiteren Schalter der Eingangshalbbrücke.

Die Erfindung schlägt vor, diese intrinsisch vorhandene Redundanz auszunutzen und jeweils mit redundanten Steuervorrichtungen anzusteuern. Liegt im Fehlerfall des Submoduls nun der Fehler einer der beiden redundanten Strompfade, kann selbst der Strom aus der elektrischen Leistungsquelle immer noch über den anderen redundanten Strompfad zuverlässig am fehlerhaften Submodul vorbeigeleitet werden.

Damit wird die Verfügbarkeit des gesamten Umrichters erhöht, ohne dass die einzelnen Submodule redundant ausgeführt werden müssten.

Die Erfindung gibt daher eine Stromrichterschaltung an, die wenigstens zwei Submodule in Reihenschaltung, die über eine Induktivität elektrische Leistung aus einer eine Gleichspannung abgebenden Leistungsquelle bezieht umfasst, wobei jedes Submodul eingangsseitig eine einphasige Halbbrücke und lastseitig eine einphasige Vollbrücke aufweist, und wobei die Halbbrücke und die Vollbrücke gleichspannungsseitig sowie parallel hierzu ein Zwischenkreiskondensator geschaltet sind. Die angegebenen Stromrichterschaltung umfasst eine erste Steuervorrichtung zum Erfassen eines Fehlers in einem der Submodule und zum Kurzschließen des Submoduls über einen in der Halbbrücke vorhandenen ersten Schalter, der parallel zum Eingang des Submoduls geschaltet ist, und eine zweite Steuervorrichtung zum Erfassen des Fehlers und zum Kurzschließen des Submoduls über einen in der Halbbrücke vorhandenen zweiten Schalter, der in Reihe zwischen dem Eingang des Submoduls und der Vollbrücke geschaltet ist und über die Vollbrücke. Das heißt, der erste Schalter der Eingangshalbbrücke ist parallel zum Eingang geschaltet, währen der zweite Schalter der Eingangshalbbrücke in Reihe zwischen dem Eingang und dem Wechselrichter schaltet ist.

Da es sich bei den Steuervorrichtung um Niederspannungselemente sind diese kostengünstig und mit wenig Bauraum in dem angegebenen Submodul implementierbar. Somit wird durch die Erfindung eine kostengünstige und platzsparende Möglichkeit gezeigt, wie die Verfügbarkeit eines modularen Umrichters erhöht werden kann. Durch das Kurzschließen des Eingangs des Submoduls kann verhindert werden, dass in einem defekten Submodul eines modularen Umrichters getaktet wird, so dass im Fehlerfall auch keine Schaltverluste im modularen Umrichter auftreten. Zudem wird der Strom aus der elektrische Leistungsquelle durch ein defektes Submodul durchgeleitet, so dass mit den verbleibenden Submodulen in einem modularen Umrichter, in dessen Submodulen die Erfindung realisiert ist, zumindest noch ein Notbetrieb sichergestellt werden kann.

In einer Weiterbildung der Erfindung umfasst die Vollbrücke zwei zueinander parallel geschaltete Halbbrücken. Dabei ist die zweite Steuervorrichtung zum Kurzschließen des Eingangs über den zweiten Schalter und die erste Wechselrichterhalbbrücke vorgesehen. Herkömmliche Vollbrücken besitzen in der Regel mehrere Halbbrücken, um eine entsprechende Anzahl an Wechselstromphasen zu erzeugen. Die Erkenntnis der Weiterbildung ist, dass jede dieser Halbbrücken für sich als redundanter Strompfad zum überbrücken des Submoduls in der Stromrichterschaltung verwendet werden kann.

Werden alle diese Wechselrichterhalbbrücken zum Kurzschließen des Eingangs des Submoduls genutzt, so wird auch der Ausgang der Vollbrücke und damit des Submoduls kurzgeschlossen. Dies hat den Vorteil, dass ein unerwünschtes Rückspeisen von Strömen aus dem elektrischen Verbraucher, wie sie beispielsweise beim Abbremsen eines Motors als elektrischer Verbraucher auftreten können, vermieden werden kann.

In einer besonderen Weiterbildung umfasst die angegebene Stromrichterschaltung in jedem Submodul einen dritten, parallel zum zweiten Schalter geschalteten Schalter. Dabei ist die erste Steuervorrichtung nach dem Erfassen des Fehlers zum Kurzschließen des Eingangs über den zweiten Schalter und die zweite Wechselrichterhalbbrücke vorgesehen. Dieser Ausführung liegt die Erkenntnis zugrunde, dass alle redundanten Strompfade aus der Vollbrücke über den zweiten Schalter der Eingangshalbbrücke im Submodul geführt sind, so dass durch den zweiten Schalter ein einkanaliger Pfad verbleibt. Der dritte Schalter wird daher angeordnet, um diesen einkanaligen Pfad redundant auszuführen.

In einer bevorzugen Weiterbildung der Erfindung umfasst das angegebene Submodul eine weitere Eingangshalbbrücke mit dem dritten Schalter und einen vierten Schalter zum Kurzschließen des Eingangs. Dabei ist die zweite Steuervorrichtung nach dem Erfassen des Fehlers zum Kurzschließen des Eingangs über den vierten Schalter vorgesehen. Das heißt, dass jede Steuervorrichtung eine eigene Eingangshalbbrücke und eine eigene Wechselrichterhalbbrücke steuert, so dass die beiden Steuervorrichtungen prinzipiell identisch und damit vollständig redundant ausgelegt werden können.

In vielen praktischen Anwendungen sind die Schalter in den Halbbrücken des Submoduls ohnehin aus mehreren parallel geschalteten Halbleiterschaltern aufgebaut, die jeder für sich einen geringen Sättigungsstrom führen können. Gemäß dem Grundgedanken der Erfindung wird hier die ohnehin vorhandene Redundanz ausgenutzt, indem ein Teil der bereits vorhandenen parallel geschaltenen Halbleiterschalter durch die erste Steuervorrichtung und der restliche Teil der parallel geschaltenen Halbleiterschalter durch die zweite Steuervorrichtung angesteuert werden. Somit ist lediglich eine zusätzliche Steuervorrichtung notwendig, da alle anderen Bauteile bereits intrinsisch im angegebenen Submodul vorhanden sind.

In einer besonders bevorzugten Weiterbildung der Erfindung umfasst die angegebene Stromrichterschaltung eine erste Stromversorgung zur elektrischen Energieversorgung der ersten Steuervorrichtung und eine zweite Stromversorgung zur elektrischen Energieversorgung der zweiten Steuervorrichtung. Eine eigene elektrische Energieversorgung für jede Steuervorrichtung steigert die Redundanz weiter und senkt das Risiko für einen Totalausfall eines modularen Umrichters mit dem angegebenen Submodul aufgrund eines Fehlers im Submodul.

In einer anderen Weiterbildung der Erfindung sind die Steuervorrichtungen zum Erfassen des Fehlers vorgesehen, wenn eine Spannung im Submodul einen vorbestimmten Schwellenwert überschreitet. Die Spannung kann an einem Schalter im Submodul oder an jeder anderen Komponente im Submodul abgegriffen werden. Im Normalbetrieb des Submoduls kann der Spannungsverlauf an jeder Komponente im Submodul innerhalb gewisser Grenzen vorhergesagt werden, so dass ein Vergleich zwischen dem vorhergesagten Spannungsverlauf und dem tatsächlichen Spannungsverlauf genügt, um einen Fehler zu erfassen.

In einer besonderen Weiterbildung der Erfindung ist die Spannung eine an einem Zwischenkreiskondensator abfallende Spannung, der parallel zur Vollbrücke geschaltet ist. Diese Zwischenkreiskapazität speichert elektrische Energie, die zwar in das Submodul fließt, das Submodul aber weder über den Eingang an der Eingangshalbleiterbrücke noch über den Ausgang an der Vollbrücke verlassen kann. Ein Fehler im Submodul, wenn ein Leistungsfluss zwischen Eingang und Ausgang des Submoduls nicht mehr gegeben ist, lässt sich daher sofort an der Zwischenkreiskapazität erkennen, wenn ihre Spannung zu hoch steigt und sie damit zu viel Energie speichert.

In einer bevorzugten Weiterbildung der Erfindung ist nach dem Erfassen des Fehlers wenigstens eine der beiden Steuervorrichtungen zum Entladen des Zwischenkreiskondensators vorgesehen. Auf diese Weise kann das Submodul beispielsweise durch ein Servicepersonal gewartet werden, ohne dass die geladene Zwischenkreiskapazität eine Gefahr für das Submodul selbst oder für das Servicepersonal darstellt.

In einer noch anderen Weiterbildung der Erfindung ist nach dem Erfassen des Fehlers wenigstens eine der beiden Steuervorrichtungen zum Reduzieren eines Stromes durch den Wechselrichter vorgesehen. Auf diese Weise wird vermieden, dass ein elektrischer Strom, der für eine an das Submodul angeschlossene elektrische Last des elektrischen Verbrauchers vorgesehen ist, nach dem Ausfall des Submoduls zu einer elektrischen Überlastung in den verbleibenden Submodulen und Teillasten am modularen Umrichter führt.

In einer alternativen oder zusätzlichen Weiterbildung der Erfindung umfasst die angegebene Stromrichterschaltung an jedem Submodul eine eingangsseitige Drossel an einem Verbindungspunkt zwischen dem ersten und zweiten Schalter, die in Reihe zur elektrischen Leistungsquelle verschaltbar ist. Die Drossel lokal am Submodul anzuordnen hat den Vorteil, dass dadurch kapazitive Ableitströme verringert werden können, die beispielsweise aufgrund von Schalttransienten aus der Eingangshalbbrücke gegen ein Gehäuse des Submoduls und/oder des modularen Umrichters abgegeben werden. Steile Potentialsprünge bleiben damit auf einen kleinen Bereich im Submodul beschränkt.

In einer bevorzugten Weiterbildung umfasst das angegebene Submodul eine weitere eingangsseitige Drossel an einem Verbindungspunkt zwischen dem dritten und vierten Schalter, die in Reihe zur elektrischen Leistungsquelle verschaltbar ist, wobei die Drossel und die weitere Drossel an einem den Halbbrücken gegenüberliegenden Anschluss miteinander elektrisch verbunden sind. Bei dieser Schaltung kann durch versetztes Takten der beiden redundanten Eingangshalbbrücken die Welligkeit des Eingangsstroms reduziert werden.

Die Erfindung gibt auch einen Elektromotor an, der einen Rotor, Motorwicklungen zum Antrieb des Rotors und eine angegebene Stromrichterschaltung zur elektrischen Energieversorgung der Motorwicklungen umfasst, wobei an jedes Submodul eine Motorwicklung angeschlossen ist.

Die Erfindung gibt auch ein Fahrzeug mit einem Elektromotor zu seinem Antrieb an.

Die Erfindung gibt auch ein Verfahren zur Ansteuerung einer Stromrichterschaltung an. Die Stromrichterschaltung umfasst wenigstens zwei Submodule in Reihenschaltung, die über eine Induktivität elektrische Leistung aus einer eine Gleichspannung abgebenden Leistungsquelle bezieht, wobei jedes Submodul eingangsseitig eine einphasige Halbbrücke und lastseitig eine einphasige Vollbrücke aufweist, und wobei die Halbbrücke und die Vollbrücke gleichspannungsseitig sowie parallel hierzu ein Zwischenkreiskondensator geschaltet sind. Das angegebene Verfahren umfasst die Schritte Erfassen eines Fehlers in einem der Submodule, Kurzschließen des Submoduls über einen in der Halbbrücke vorhandenen ersten Schalter, der parallel zum Eingang des Submoduls geschaltet ist, und Kurzschließen des Submoduls über einen in der Halbbrücke vorhandenen zweiten Schalter, der in Reihe zwischen dem Eingang des Submoduls und der Vollbrücke geschaltet ist sowie über die Vollbrücke.

Weiterbildungen des Verfahrens können Verfahrensschritte sein, die die Merkmale der angegebenen Stromrichterschaltung gemäß den Unteransprüchen sinngemäß realisieren.

Die Erfindung gibt auch eine Steuervorrichtung zur Durchführung eines angegebenen Verfahrens an.

In einer Weiterbildung weist die Vorrichtung einen Speicher und einen Prozessor auf. Dabei ist das Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, die im Zusammenhang mit den Zeichnungen näher erläutert werden, wobei:
- FIG 1: eine Schaltung mit einem beispielhaften Umrichter und
- FIG 2: ein Submodul des Umrichters der FIG 1 zeigen.

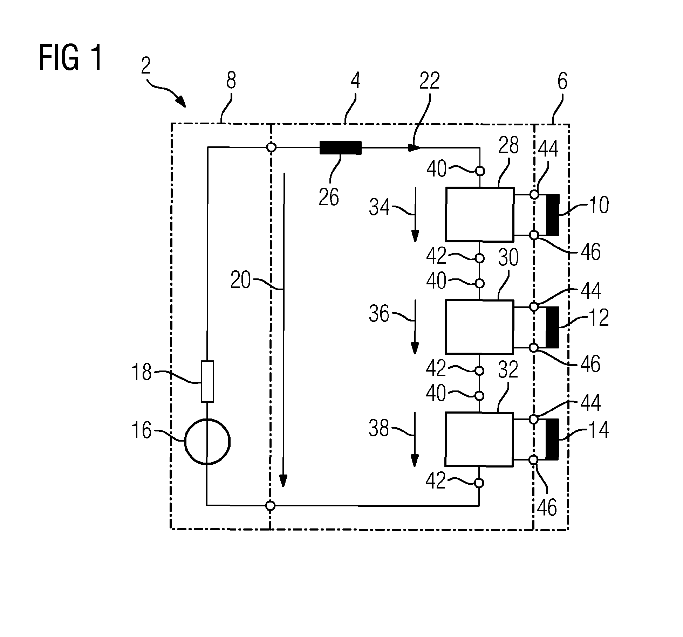

Es wird auf FIG 1 Bezug genommen, die eine Schaltung 2 mit einem beispielhaften modularen Umrichter 4 zeigt. Der modulare Umrichter 4 speist einen elektrischen Verbraucher 6 mit elektrischer Leistung aus einer elektrischen Leistungsquelle 8.

Der elektrische Verbraucher weist eine erste Last 10, eine zweite Last 12 und eine dritte Last 14 auf.

Die elektrische Leistungsquelle 8 ist in der vorliegenden Ausführung eine Batterie 8, die sich in eine Spannungsquelle 16 mit einem dazu in Reihe angeschlossenen Innenwiderstand 18 zerlegen lässt. Die Batterie 8 legt an den modularen Umrichter 4 eine Batteriespannung 20 an und gibt an den modularen Umrichter 4 einen Batteriestrom 22 ab.

An die Batterie 8 schließt sich eingangsseitig im modularen Umrichter 4 eine Reihenschaltung aus einer Induktivität 26, die beispielsweise eine Spule sein kann, einem ersten Submodul 28, einem zweiten Submodul 30 und einem dritten Submodul 32 ein. An den Submodulen 28 bis 32 fällt entsprechend eine erste Teilspannung 34, eine zweite Teilspannung 36 und eine dritte Teilspannung 38 ab. Ferner sind an das erste bis dritte Submodul 28 bis 32 entsprechend die erste bis dritte Last 10 bis 14 angeschlossen. Basierend auf den Teilspannungen 34 bis 38 versorgen die Submodule 28 bis 32 auf diese Weise die Lasten 10 bis 14 mit elektrischer Energie in einer noch zu beschreibenden Weise. Für die Anzahl der Submodule und Lasten wurde in der vorliegenden Ausführung drei gewählt. Der modulare Umrichter kann jedoch eine beliebig hohe Anzahl an Submodulen besitzen und damit eine beliebig hohe Anzahl an Lasten speisen. Je mehr Submodule jedoch in der Reihenschaltung verschaltet sind, desto kleiner werden die entsprechenden Teilspannungen.

Jedes Submodul 28 bis 32 weist eine erste Eingangsklemme 40, eine zweite Eingangsklemme 42, eine erste Ausgangsklemme 44 und eine zweite Ausgangsklemme 46 auf. Während über den ersten und zweiten Eingangsklemmen 40, 42 jeweils die Teilspannungen 34 bis 38 abfallen, sind an die ersten und zweiten Ausgangsklemmen 44, 46 die Lasten 10 bis 14 angeschlossen.

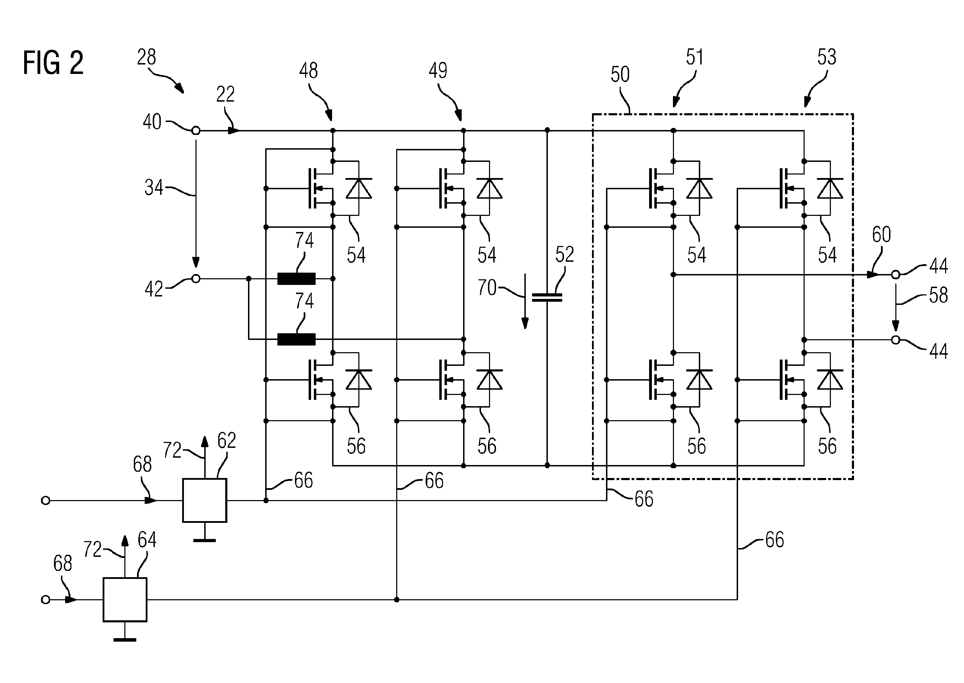

Es wird auf FIG 2 Bezug genommen, die beispielhaft den Aufbau des Submoduls 28 in dem modularen Umrichter der FIG 1 zeigt. Das zweite und das dritte Submodul 30, 32 sind analog zum ersten Submodul 28 aufgebaut. In FIG 2 werden zu FIG 1 gleiche Elemente mit gleichen Bezugszeichen versehen und nicht noch einmal beschrieben.

Das erste Submodul 28 weist eine erste Eingangshalbbrücke 48, eine zweite Eingangshalbbrücke 49, eine Vollbrücke 50, nachstehend Wechselrichter 50 genannt, und einen Zwischenkreiskondensator 52 auf, die miteinander parallel verschaltet sind.

Die erste Eingangshalbbrücke 48 weist einen ersten Schalter 54 und einen dazu in Reihe geschalteten zweiten Schalter 56 auf. Die Schalter bestehen in der vorliegenden Ausführung jeweils aus einem nicht näher referenzierten MOSFET (Metalloxid-Feldeffekttransistor) und jeweils einer dazu parallel geschalteten Freilaufdiode.

Die erste Teilspannung 34 ist an den ersten Schalter 54 angelegt, während der zweite Schalter 56 in Reihe zwischen dem ersten Schalter 54 und dem Wechselrichter 50 geschaltet ist. Somit kann der erste Schalter 54 aus Sicht des Wechselrichters 50 den Eingang aus der Batterie 8 kurzschließen, während der zweite Schalter 56 (bei geöffneten ersten Schalter 54) den Wechselrichter 50 in den Strompfad der Batterie 8 legen kann. Werden in jedem Submodul 28 bis 32 die Schalter 54, 56 in gleicher Weise abwechselnd geöffnet und geschlossen, ist gemeinsam mit der Induktivität 26 ein Hochsetzsteller geschaffen, der die Summe der Teilspannungen 34 bis 38 höher setzt, als die Batteriespannung 20. Weiterhin kann durch die erste Eingangshalbbrücke 48 der Wechselrichter 50 auch dauerhaft aus der Reihenschaltung der drei Submodule 28 bis 32 entfernt werden, wenn der erste Schalter 54 dauerhaft geschlossen bleibt.

Die zweite Eingangshalbbrücke 49 ist parallel zur ersten Eingangshalbbrücke 48 geschalten und weist die gleiche Struktur auf, wie die erste Eingangshalbbrücke 48. In der zweiten Eingangshalbbrücke 49 werden daher zur ersten Eingangshalbbrücke 48 gleiche Elemente mit gleichen Bezugszeichen versehen und nicht noch einmal beschrieben.

Die Schalter 54, 56 der beiden Eingangshalbbrücken 48, 49 sind jeder in nicht gezeigter Weise aus einer Vielzahl von parallel geschalteten Einzelschaltern aufgebaut. Gemeinsam können die beiden Eingangshalbbrücken eine für die elektrische Last 10 notwendige elektrische Leistung führen. Letztendlich wird lediglich ein Teil der parallel geschalteten Einzelschalter eines Schalters 54, 56 zur ersten Eingangshalbbrücke 48 und ein weiterer Teil der der parallel geschalteten Einzelschalter eines Schalters 54, 56 zur zweiten Eingangshalbbrücke 49 zugeordnet.

Der Wechselrichter 50 ist als Vierquadrantensteller ausgeführt, der eine erste Wechselrichterhalbbrücke 51 und eine zweite Wechselrichterhalbbrücke 53 aufweist. Beide Halbbrücken sind im Wesentlichen analog zu den Eingangshalbbrücken 48, 49 aufgebaut. Daher werden in den Wechselrichterhalbbrücken 51, 53 zu den Eingangshalbbrücken 48, 49 gleiche Elemente mit gleichen Bezugszeichen versehen und nicht noch einmal beschrieben. Im Unterschied zu den Eingangshalbbrücken 48, 49 sind jeweils die ersten und zweiten Schalter 54, 56 der beiden Wechselrichterhalbbrücken nicht parallel miteinander verbunden, so dass an den die Ausgangsklemmen 44, 46 darstellenden Mittelpunkten der Wechselrichterhalbbrücken 51, 53 eine Spannung abgreifbar ist.

Die Teilspannung 34, die über den Zwischenkreiskondensator 52 stabilisiert wird (vorausgesetzt der zweite Schalter 56 wird als verlustlos angesehen), kann durch eine geeignete Ansteuerung des Wechselrichters 50 in eine Wechselspannung 58 umgewandelt werden. Die Wechselspannung 58 wird an die erste Last 10 angelegt und ruft einen entsprechenden Wechselstrom 60 durch die erste Last 10 hervor. Gibt die erste Last 10 elektrische Energie an den als Vierquadrantensteller ausgeführten Wechselrichter 50 ab, so kann dieser den entsprechenden Leistungsfluss zurück in das erste Submodul 50 leiten.

Die Ansteuerung des Wechselrichters 50 erfolgt über eine erste Steuervorrichtungen 62 und eine zweite Steuervorrichtung 64. Während die erste Steuervorrichtung 62 zur Ansteuerung der ersten Eingangshalbbrücke 48 und der ersten Wechselrichterhalbbrücke 51 vorgesehen ist, ist die zweite Steuervorrichtung 64 zur Ansteuerung der zweiten Eingangshalbbrücke 49 und der zweiten Wechselrichterhalbbrücke 53 vorgesehen. Dazu übertragen die beiden Steuervorrichtungen 62, 64 Ansteuersignale über Ansteuerleitungen 66 an die jeweiligen Halbbrücken 48, 49, 51, 53 basierend auf Sollsignalen 68, die die beiden Steuervorrichtungen 62, 64 beispielsweise von einer nicht gezeigten, übergeordneten Recheneinrichtung empfangen können.

Zur Erkennung eines Fehlers erfassen die beiden Steuervorrichtungen 62, 64 unabhängig voneinander und in nicht gezeigter Weise die Zwischenkreiskondensatorspannung 70. Ist die Zwischenkreiskondensatorspannung 70 zu hoch, dann schließen die beiden Steuervorrichtungen 62, 64 unabhängig voneinander dauerhaft alle Schalter 54, 56 in den Halbbrücken 48, 49, 51, 53. Auf diese Weise wird die elektrische Leistung aus der Batterie 8 über die dauerhaft geschlossenen Schalter 54, 56 an der angeschlossenen Last 10 vorbeigeleitet. Fällt eine der beiden Steuervorrichtungen 62, 64 oder einer der Schalter 54, 56 aus, so ist im Fehlerfall durch die jeweils andere Steuervorrichtung 62, 64 immer noch ein zuverlässiger eingangsseitiger Kurzschluss des Submoduls 28 gegeben.

Zwar wurde weiter oben beschrieben, das beide Eingangshalbbrücken 48, 49 gemeinsam ausgelegt sind, eine bestimmte Leistung für die Last 10 und damit den Batteriestrom 22 zu führen, dies hat beim Ausfall einer der beiden Eingangshalbbrücken 48, 49 während des eingangsseitigen Kurzschlusses jedoch keine Auswirkungen, da sich der Kurzschlusspfad aus einer Parallelschaltung über den ersten Schalter 54 einer Eingangshalbbrücke 48 und über den zweiten Schalter 54 einer Eingangshalbbrücke 48 in Verbindung mit einer Wechselrichterhalbbrücke 51, 53 zusammensetzt, der in der Summe wieder den Batteriestrom 22 führen kann.

Zur Erhöhung der Unabhängigkeit beider Steuervorrichtungen 62, 64 voneinander können beide Steuervorrichtungen 62, 64 von einer jeweils unabhängigen elektrischen Energieversorgung 72 gespeist werden.

Zwischen den ersten und zweiten Schaltern 54, 56 einer jeden Eingangshalbbrücke 48, 49 kann eingangsseitig eine Induktivität 74 verschaltet sein. Die Induktivitäten 74, die so an jedem Submodul 28 bis 32 vorhanden sind, können die Induktivität 26 ergänzen oder ersetzten.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Stromrichterschaltung (4), umfassend wenigstens zwei Submodule (28,30,32) in Reihenschaltung, die über eine Induktivität (26) elektrische Leistung aus einer eine Gleichspannung (20) abgebenden Leistungsquelle (8) bezieht, wobei jedes Submodul (28,30,32) eingangsseitig eine einphasige Halbbrücke (48,49) und lastseitig eine einphasige Vollbrücke (50) aufweist, und wobei die Halbbrücke (48,49) und die Vollbrücke (50) gleichspannungsseitig sowie parallel hierzu ein Zwischenkreiskondensator (52) geschaltet sind,
**gekennzeichnet durch**
- eine erste Steuervorrichtung (62) zum Erfassen eines Fehlers in einem der Submodule (28,30,32) und zum Kurzschließen des Submoduls (28,30,32) über einen in der Halbbrücke (48,49) vorhandenen ersten Schalter (54), der parallel zum Eingang des Submoduls (28,30,32) geschaltet ist, und
- eine zweite Steuervorrichtung (64) zum Erfassen des Fehlers und zum Kurzschließen des Submoduls (28,30,32) über einen in der Halbbrücke (48,49) vorhandenen zweiten Schalter (56), der in Reihe zwischen dem Eingang des Submoduls (28,30,32) und der Vollbrücke (50) geschaltet ist, und über die Vollbrücke (50).

2. Stromrichterschaltung (4) nach Anspruch 1, wobei die Vollbrücke (50) zwei zueinander parallel geschaltete Wechselrichterhalbbrücken (51,53) umfasst und die zweite Steuervorrichtung (64) zum Kurzschließen des Eingangs (40,42) durch Schließen des zweiten Schalters (56) und durch in der ersten Wechselrichterhalbbrücke (53) vorhandene Schalter (54,56) vorgesehen ist.

3. Stromrichterschaltung (4) nach Anspruch 2, umfassend in jedem Submodul einen dritten, parallel zum zweiten Schalter (56) geschalteten Schalter (56), wobei die erste Steuervorrichtung (62) nach dem Erfassen des Fehlers zum Kurzschließen des Eingangs (40,42) über den dritten Schalter (56) und die zweite Wechselrichterhalbbrücke (51) vorgesehen ist.

4. Stromrichterschaltung (4) nach Anspruch 3, umfassend in jedem Submodul (28,30,32) eine weitere Eingangshalbbrücke (49) mit dem dritten Schalter (56) und einem vierten Schalter (54) zum Kurzschließen des Eingangs (40,42), wobei die zweite Steuervorrichtung (64) nach dem Erfassen des Fehlers zum Kurzschließen des Eingangs (40,42) über den vierten Schalter (54) vorgesehen ist.

5. Stromrichterschaltung (4) nach einem der vorstehenden Ansprüche, umfassend eine erste Stromversorgung (72) zur elektrischen Energieversorgung der ersten Steuervorrichtung (62) und eine zweite Stromversorgung (72) zur elektrischen Energieversorgung der zweiten Steuervorrichtung (64).

6. Stromrichterschaltung (4) nach einem der vorstehenden Ansprüche, wobei die Steuervorrichtungen (62,64) zum Erfassen des Fehlers vorgesehen sind, wenn eine Spannung (70) im Submodul einen vorbestimmten Schwellenwert überschreitet.

7. Stromrichterschaltung (4) nach Anspruch 6, wobei die Spannung (70) eine an einem Zwischenkreiskondensator (52) abfallende Spannung ist, der parallel zur Vollbrücke (50) geschaltet ist.

8. Stromrichterschaltung (4) nach Anspruch 7, wobei nach dem Erfassen des Fehlers wenigstens eine der beiden Steuervorrichtungen (62,64) zum Entladen des Zwischenkreiskondensators (52) vorgesehen ist.

9. Stromrichterschaltung (4) nach einem der vorstehenden Ansprüche wobei nach dem Erfassen des Fehlers wenigstens eine der beiden Steuervorrichtungen (62,64) zum Reduzieren eines Stromes (22) durch die Vollbrücke (50) vorgesehen ist.

10. Stromrichterschaltung (4) nach einem der vorstehenden Ansprüche, umfassend eine eingangsseitige Drossel (74) an einem Verbindungspunkt zwischen dem ersten und zweiten Schalter (54,56), die in Reihe zur elektrischen Leistungsquelle (8) verschaltbar ist.

11. Stromrichterschaltung (4) nach Anspruch 10, umfassend eine weitere eingangsseitige Drossel (74) an einem Verbindungspunkt zwischen dem dritten und vierten Schalter (54,56), die in Reihe zur elektrischen Leistungsquelle (8) verschaltbar ist, wobei die Drossel (74) und die weitere Drossel (74) an einem den Halbbrücken (48,49) gegenüberliegenden Anschluss (42) miteinander elektrisch verbunden sind.

12. Elektromotor umfassend einen Rotor, Motorwicklungen, zum Antrieb des Rotors und eine Stromrichterschaltung (4) nach einem der vorstehenden Ansprüche zur elektrischen Energieversorgung der Motorwicklungen, wobei an jedes Submodul eine Motorwicklung angeschlossen ist.

13. Fahrzeug umfassend einen Elektromotor nach Anspruch 12 zu seinem Antrieb.

14. Verfahren zur Ansteuerung einer Stromrichterschaltung(4), umfassend wenigstens zwei Submodule (28,30,32) in Reihenschaltung, die über eine Induktivität (26) elektrische Leistung aus einer eine Gleichspannung (20) abgebenden Leistungsquelle (8) bezieht, wobei jedes Submodul (28,30,32) eingangsseitig eine einphasige Halbbrücke (48,49) und lastseitig eine einphasige Vollbrücke (50) aufweist, und wobei die Halbbrücke (48, 49) und die Vollbrücke (50) gleichspannungsseitig sowie parallel hierzu ein Zwischenkreiskondensator (52) geschaltet sind,
**gekennzeichnet durch**
- Erfassen eines Fehlers in einem der Submodule (28,30, 32),
- Kurzschließen des Submoduls (28,30,32) über einen in der Halbbrücke (48,49) vorhandenen ersten Schalter (54), der parallel zum Eingang des Submoduls (28,30,32) geschaltet ist, und
- Kurzschließen des Submoduls (28,30,32) über einen in der Halbbrücke (48,49) vorhandenen zweiten Schalter (54), der in Reihe zwischen dem Eingang des Submoduls (28,30, 32) und der Vollbrücke (50) geschaltet ist und über die Vollbrücke (50).

15. Steuervorrichtung zur Durchführung eines Verfahrens nach Anspruch 14.
